# EUROPÄISCHE PATENTSCHRIFT

(11) **EP 3 367 019 B1**
(45) Veröffentlichungstag und Bekanntmachung des Hinweises auf die Patenterteilung: **15.04.2020**
(21) Anmeldenummer: 17209093.8
(22) Anmeldetag: 20.12.2017
(51) Int. Cl.: F24T 10/17, F24T 10/13, F24T 10/15, F24T 10/40

(54) **ERDWÄRMESONDE**
GEOTHERMAL PROBE
SONDE GÉOTHERMIQUE

(30) Priorität: 22.02.2017 AT 632017
(43) Veröffentlichungstag der Anmeldung: 29.08.2018
(73) Patentinhaber: Jansen AG, 9463 Oberriet (CH)
(72) Erfinder: Jansen, Christian, 9463 Oberriet (CH)
(74) Vertreter: Fechner, Thomas

(56) Entgegenhaltungen:
- EP-A1- 1 486 741
- EP-A1- 2 998 635
- DE-U1- 20 320 409
- DE-U1-202007 008 880
- US-A1- 2002 189 697
- US-B2- 9 546 802

## Beschreibung

Die vorliegende Erfindung betrifft eine Erdwärmesonde mit zumindest einem Sondenrohr, wobei ein Rohrinnenhohlraum des Sondenrohres mit einem, zweiphasigen Wärmeträgerfluid befüllt ist, und eine, den Rohrinnenhohlraum umgebende, Wandung des Sondenrohres zumindest eine in sich umfangsgeschlossene Diffusionssperrschicht aus Metall und zumindest eine, die Diffusionssperrschicht außen ummantelnde Mantelschicht aus Kunststoff aufweist. Darüber hinaus betrifft die Erfindung auch ein Verfahren zum Betrieb einer Erdwärmesonde und auch eine Anordnung mit einem in einem Untergrund angeordneten Bohrloch und zumindest einer in dem Bohrloch angeordneten Erdwärmesonde.

Erdwärmesonden werden, wie das der Begriff der Erdwärmesonde an sich bereits aussagt, zur Gewinnung von Erdwärme aus dem Untergrund verwendet, um die so gewonnene Wärme z.B. in Verbindung mit einer Wärmepumpe zum Heizen von Gebäuden verwenden zu können. Zur Wärmegewinnung aus dem Untergrund wird bei einer Vielzahl von Erdwärmesonden sich permanent im flüssigen Zustand befindendes Wärmeträgerfluid durch die Erdwärmesonde gepumpt. Es sind beim Stand der Technik aber auch bereits Erdwärmesonden speziell für sogenannte zweiphasige Wärmeträgerfluide bekannt. Bei diesen Erdwärmesonden läuft das Wärmeträgerfluid in flüssiger Form in die Erdwärmesonde hinunter und nimmt dabei so viel Erdwärme auf, dass es verdampft und in gasförmiger Form in der Erdwärmesonde wieder aufsteigt. Als Wärmeträgerfluid wird bei solchen Erdwärmesonden beim Stand der Technik vorzugsweise Kohlendioxid, also CO₂, verwendet.

Die DE 20 2007 008 880 U1 offenbart ein Wärmeübertragungsrohr für den Entzug von Erdwärme für geringe Druckanforderungen, wobei das Wärmeübertragungsrohr eine Innenschicht, eine Diffusionssperrschicht und eine äußere Schicht aufweist und zwischen diesen Schichten Haftvermittlerschichten vorhanden sind.

Erdwärmesonden für zweiphasige Wärmeträgerfluide sind z.B. aus der DE 10 2008 049 731 A1 und der DE 203 20 409 U1 bekannt. Laut diesen Schriften werden sogenannte Wellrohre verwendet, um die Sondenrohre der Erdwärmesonde herzustellen. Unter anderem zeigen diese Schriften Ausführungsvarianten, bei denen zwei koaxial ineinander angeordnete aber voneinander beabstandete Wellrohre das Sondenrohr bilden. Die Schriften geben an, dass das innere Wellrohr im Prinzip aus allen flexiblen Rohrmaterialien, also aus Metallen oder Kunststoffen mit glatten oder gewellten Außenumfangswandungen ausgebildet werden können.

Aus der AT 5149 U1 sind Erdwärmesonden bekannt, welche CO₂ als Wärmeträgerfluid verwenden und bei denen als Sondenrohr ein mit Kunststoff beschichtetes Kupferrohr verwendet wird, welches als Rollenware im Handel erhältlich ist.

Erdwärmesonden der genannten Art müssen verschiedenen Anforderungen gerecht werden, um insbesondere für zweiphasige Wärmeträgerfluide einsetzbar und andererseits aber auch kostengünstig und zuverlässig im Bohrloch montierbar zu sein.

Zum einen ist hierbei zu bedenken, dass Erdwärmesonden für insbesondere zweiphasige Wärmeträgerfluide hohen Drücken standhalten müssen. Weiters benötigen sie eine umfangsgeschlossene Diffusionssperrschicht aus Metall, damit das Wärmeträgerfluid vor allem im gasförmigen Zustand nicht durch die Wandung des Sondenrohres hindurch nach außen diffundieren kann. Andererseits sollen die Sondenrohre der Erdwärmesonde natürlich kostengünstig und einfach zum Bohrloch transportierbar und in dieses einbaubar sein. Im Sinne eines günstigen Transports und einfachen Einbaus sollte die Metallschicht, welche als Diffusionssperrschicht verwendet wird, möglichst dünnwandig sein. Andererseits sollte das Sondenrohr an sich so stabil sein, dass es beim Einbau nicht beschädigt wird und auch den benötigten Betriebsdrücken dauerhaft standhält. Vor allem ist es aber günstig, wenn das Sondenrohr der Erdwärmesonde in möglichst großen Stücken, besonders bevorzugt in einem Stück, auf die Baustelle transportiert werden kann. Hierzu sollte das Sondenrohr der Erdwärmesonde möglichst zu einer Rolle aufwickelbar sein.

Aufgabe der Erfindung ist es, eine Erdwärmesonde der eingangs genannten Art zur Verfügung zu stellen, welche einerseits die benötige Druckstabilität und einen ausreichenden Schutz gegen Beschädigung aufweist, und andererseits trotzdem zu einer Rolle aufwickelbar ist. Weiters soll der Flüssigkeitsfilm des Wärmeträgerfluids möglichts gleichmäßig auf der Innenoberfläche des Sondenrohres verteilt werden.

Zur Lösung dieser Aufgabe wird eine Erdwärmesonde gemäß Patentanspruch 1 vorgeschlagen.

Durch das erfindungsgemäße miteinander Verkleben der Diffusionssperrschicht mit der Mantelschicht wird ein einerseits sehr stabiler, andererseits aber auch flexibler und zu einer Rolle aufwickelbarer Verbund geschaffen, welcher die oben genannten Anforderungen sehr gut erfüllt. Die Diffusionssperrschicht aus Metall verhindert das Herausdiffundieren des Wärmeträgerfluides, insbesondere im gasförmigen Zustand, aus dem Sondenrohr. Hierzu ist die Diffusionssperrschicht umfangsgeschlossen. Sie weist also in Umfangsrichtung des Sondenrohres eine geschlossene Oberfläche auf. Es handelt sich somit bevorzugt um eine rohrförmige Schicht, welche, abgesehen von den Stirnseiten, vollständig geschlossen ist. Die Mantelschicht aus Kunststoff schützt die Diffusionssperrschicht von außen gegen Beschädigung. Durch das Verkleben der Mantelschicht mit der Diffusionssperrschicht wird aber vor allem eine Verstärkung der Diffusionssperrschicht geschaffen, durch die das Sondenrohr als Ganzes wickelbar wird, ohne dass hierbei die aus Metall bestehende Diffusionssperrschicht knickt oder in anderer Art und Weise beschädigt wird.

Erfindungsgemäße Erdwärmerohre werden für zweiphasige Wärmeträgerfluide eingesetzt bzw. sind mit diesen gefüllt. Zweiphasige Wärmeträgerfluide sind Wärmeträgerfluide, welche während des Betriebes der Erdwärmesonde einen Phasenübergang von flüssig hin zu gasförmig und wieder zurück durchführen. Sie nehmen während des Betriebs der Erdwärmesonde also zwei verschiedene Phasenzustände nämlich flüssig und gasförmig ein. Als zweiphasiges Wärmeträgerfluid kommt vorzugsweise CO₂ zum Einsatz, da es unproblematisch zu handhaben und umweltverträglich ist. Es ist aber auch denkbar, als entsprechend zweiphasige Wärmeträgerfluide Ammoniak (NH3) oder Kohlenwasserstoffe wie Propan oder dergleichen einzusetzen. Der Vollständigkeit halber wird darauf hingewiesen, dass das Sondenrohr zum Betrieb der Erdwärmesonde mit einer gegenüber der Normalluft erhöhten Konzentration an Wärmeträgerfluid und insbesondere CO₂ befüllt ist. Andererseits können natürlich auch andere Restgase noch im Sondenrohr vorhanden sein. Die Konzentration des Wärmeträgerfluides im Sondenrohr beim Betrieb der Erdwärmesonde liegt günstigerweise zumindest bei 95 %, vorzugsweise zumindest bei 99 %. Das Wärmeträgerfluid ist im Betrieb der Erdwärmesonde im Sondenrohr günstigerweise vollständig eingeschlossen. Bei zweiphasigen Systemen befindet sich das Wärmeträgerfluid unter einem gegenüber Normalbedingungen deutlich erhöhten Druck im Sondenrohr. Die Betriebsdrücke des Wärmeträgerfluides im Sondenrohr beim Betrieb der Erdwärmesonde und damit auch die Druckfestigkeit der Sondenrohre liegen günstigerweise in einem Bereich von 30 bar bis 75 bar. Bei Erdwärmesonden handelt es sich, wie allgemein im Sprachgebrauch üblich und aus dem Wort bereits selbst ersichtlich, um eine Sonde, mit der Wärme aus dem Untergrund gewonnen werden kann.

Ein Verfahren zum Betrieb einer erfindungsgemäßen Erdwärmesonde sieht günstigerweise vor, dass das Wärmeträgerfluid in einer Verdampfungszone der Erdwärmesonde verdampft wird und von dort im Rohrinnenhohlraum als Gas aufsteigt und nach seiner Kondensation als Flüssigkeit an der den Rohrinnenhohlraum begrenzenden Innenoberfläche des Sondenrohres wieder zur Verdampfungszone zurückfließt.

Die Verdampfungszone, welche auch als Heizzone bezeichnet werden kann, wird dabei günstigerweise, in der Einbaustellung der Erdwärmesonde im Bohrloch gesehen, vom unteren Bereich des Sondenrohres gebildet. Zum Verdampfen in der Verdampfungszone nimmt das Wärmeträgerfluid entsprechende Wärme aus dem das Bohrloch, in dem die Erdwärmesonde angeordnet ist, umgebenden Untergrund auf. Durch Kondensation des Wärmeträgerfluides in einer Kühlzone der Erdwärmesonde kann die Wärme dann aus dem Wärmeträgerfluid gewonnen und der weiteren Verwendung zugeführt werden. Diese Kühlzone befindet sich in der Regel, in der Einbaustellung gesehen, im oberen Bereich der Erdwärmesonde. In der Kühlzone kann zur Gewinnung der Wärme ein Kondensator und/oder Wärmetauscher oder dergleichen angeordnet sein. Das Sondenrohr kann aber auch selbst als Kondensator und/oder Wärmetauscher zur Gewinnung der Wärme eingesetzt werden. Der Kondensator und/oder Wärmetauscher kann grundsätzlich getrennt von der Erdwärmesonde ausgeführt und mit dieser über entsprechende Rohrleitungen verbunden sein. Um Wärmeverluste möglichst zu vermeiden, sehen bevorzugte Varianten erfindungsgemäßer Erdwärmesonden aber vor, dass die Erdwärmesonde selbst einen Kondensator und/oder Wärmetauscher zum Kondensieren des sich im gasförmigen Zustand befindenden Wärmeträgerfluides in der Kühlzone aufweist. Der Kondensator und/oder Wärmetauscher kann dann, in der Einbaustellung gesehen, direkt am Sondenkopf der Erdwärmesonde, also an dem in Betriebsstellung bzw. Einbaustellung oberen Ende der Erdwärmesonde bzw. des Sondenrohres angebracht sein. Günstigerweise münden das Sondenrohr bzw. die Sondenrohre der erfindungsgemäßen Erdwärmesonde direkt in den Kondensator und/oder Wärmetauscher.

Die Sondenrohre erfindungsgemäßer Erdwärmesonden sind außen günstigerweise glatt, also insbesondere nicht als Wellrohr ausgebildet. Der Durchmesser des Rohrinnenhohlraums eines jeden Sondenrohres kann in bevorzugten Varianten von 10mm (Millimeter) bis 100mm, besonders bevorzugt von 14mm bis 50mm, betragen. Der Rohrinnenhohlraum der Sondenrohre erfindungsgemäßer Erdwärmesonden ist günstigerweise bis auf das dort vorhandene Wärmeträgermedium leer. Dies soll heißen, dass insbesondere keine sonstigen Einbauten bzw. Festkörper wie z.B. zusätzliche innen liegende Rohre oder dergleichen im Rohrinnenhohlraum vorhanden sind.

Eine Erdwärmesonde kann ein einziges Sondenrohr aufweisen. Bei erfindungsgemäßen Erdwärmesonden ist es aber genauso gut möglich, dass mehrere Sondenrohre sich in einem Bohrloch befinden und zu einer Erdwärmesonde zusammengefasst sind. Es kann dann auch vorgesehen sein, dass alle Sondenrohre einer Erdwärmesonde in einen gemeinsamen Kondensator münden oder mit diesem zumindest verbunden sind. Natürlich kann auch jedem einzelnen Sondenrohr oder einer Gruppe von Sondenrohren ein einzelner Kondensator zugeordnet sein. Die Länge der Sondenrohre kann bis zu 400 m betragen. Durch die Verklebung von Diffusionssperrschicht und Mantelschicht müssen die Sondenrohre beim Einbau in das Bohrloch nicht mit Überdruck beim Rohrinnenhohlraum beaufschlagt werden.

Die Diffusionssperrschicht verhindert, wie oben bereits ausgeführt, die Diffusion des Wärmeträgerfluides, insbesondere auch im gasförmigen Zustand. Sie ist daher umfangsgeschlossen und weist keine Öffnung auf, durch die Wärmeträgerfluid austreten kann. Wie oben bereits ausgeführt, besteht die Diffusionssperrschicht aus Metall. Dies ist dahingehend zu verstehen, dass es sich um ein reines Metall aber auch um eine Metalllegierung handeln kann. Besonders bevorzugt kommen hier Aluminium bzw. Aluminiumlegierungen, z.B. die Legierung 8006, 8011, 3003, 3005, 1200 oder 1050 zum Einsatz. Andere bevorzugte Varianten sehen vor, dass die Diffusionssperrschicht aus Edelstahl besteht oder dies zumindest aufweist. Bevorzugte Edelstahllegierungen sind z.B. 1.4301, 1.4306, 1.4404 oder 1.4016. Die Diffusionssperrschicht weist günstigerweise eine Wandstärke von 0,05mm (Millimeter) bis 1,0mm, vorzugsweise von 0,1mm bis 0,5mm auf. Bei Aluminium bzw. Aluminiumlegierungen liegt die Wandstärke besonders bevorzugt im Bereich zwischen 0,4mm und 0,5mm. Bei Edelstahl sind bevorzugte Wandstärken insbesondere bei 0,1mm bis 0,25mm. Neben der Diffusionsdichtigkeit trägt die Diffusionssperrschicht auch zur Innendruckfestigkeit des Sondenrohres und zum optimierten Wärmeübergang durch die Wand des Sondenrohres bei. Als Alternativen zu Aluminium, Aluminiumlegierungen und Edelstahl können auch Titan oder Magnesium als reines Metall oder als Bestandteil einer Metalllegierung zur Ausbildung der Diffusionssperrschicht eingesetzt werden.

Die Mantelschicht besteht aus Kunststoff. Es kann sich auch hier um reine Kunststoffe oder um Kunststoffe mit Zuschlagsstoffen oder anderen Anteilen handeln. Z.B. können diese Kunststoffe Fasern wie z.B. Glasfasern oder Karbonfasern zur Faserverstärkung aber auch andere Füllstoffe mit enthalten. Bevorzugt handelt es sich bei den Kunststoffen zumindest in ihrer Grundmatrix um Thermoplaste oder Elastomere. Besonders bevorzugt kann der Kunststoff ein Polyethylen wie z.B. PE100-RC oder ein Polyamid wie z.B. PA12 sein. Die Mantelschicht kann in bevorzugten Varianten eine Wandstärke von 0,5mm bis 10mm, besonders bevorzugt von 0,4mm bis 4,0mm, aufweisen. Wie bereits ausgeführt, ist die Mantelschicht günstigerweise außen glatt also nicht als Wellrohr oder dergleichen ausgebildet. Die Mantelschicht dient als mechanischer Schutz der Diffusionssperrschicht nach außen und als Stabilisierung. Insbesondere verschafft die Mantelschicht zusammen mit der Verklebung dem Gesamtaufbau des Sondenrohres die nötige Knickfestigkeit, sodass die Diffusionssperrschicht, insbesondere auch beim Aufwickeln auf eine Rolle nicht geknickt wird. Darüber hinaus verstärkt die Mantelschicht auch noch die Innendruckfestigkeit des Sondenrohres. Außerdem verleiht sie dem Sondenrohr eine hohe Abriebfestigkeit nach außen und schützt das Metall der Diffusionssperrschicht vor Korrosion oder anderen chemischen Einwirkungen.

Der Kleber, mit dem die Diffusionssperrschicht und die Mantelschicht miteinander verklebt sind, muss grundsätzlich dazu geeignet sein, die entsprechenden Materialien der Mantelschicht und der Diffusionssperrschicht miteinander zu verkleben. Günstigerweise kommen hier polymere Kleber zum Einsatz. Das Trägermaterial des Klebers ist günstigerweise derselbe Kunststofftyp wie der Kunststoff der Mantelschicht. Handelt es sich beim Kunststoff der Mantelschicht z.B. um ein Polyethylen so ist das Trägermaterial des Klebers günstigerweise auch ein Polyethylen, wobei es sich nicht zwingend um dieselben Polyethylene handeln muss. Das Gleiche gilt für Varianten bei denen die Mantelschicht z.B. aus Polyamid besteht. Auch hier ist es dann günstig, wenn das Trägermaterial des Klebers ein Polyamid ist, auch wenn es nicht identisch dasselbe Polyamid wie der Kunststoff der Mantelschicht sein muss. Der Kleber kann darüber hinaus zur Verklebung mit dem Metall modifiziert sein, z.B. indem er entsprechend funktionale Gruppen wie z.B. Anhydrid, Maleinsäure-Anhydrid oder ähnliche funktionale Gruppen aufweist.

Die Dicke des Klebers zwischen Mantelschicht und Diffusionssperrschicht beträgt günstigerweise zwischen 0,03mm und 0,30mm, besonders bevorzugt von 0,05mm bis 0,15mm. Grundsätzlich könnte der Kleber zwischen Diffusionssperrschicht und Mantelschicht punktförmig, streifenförmig oder dergleichen ausgebildet sein. Besonders bevorzugte Ausführungsformen sehen aber vor, dass der Kleber in Form einer Klebschicht ausgebildet ist, indem die Diffusionssperrschicht mit der Mantelschicht und/oder die gegebenenfalls vorhandene Innenschicht mit der Diffusionssperrschicht mittels zumindest einer zwischen ihnen angeordneten Klebschicht vollflächig miteinander verklebt sind.

In ihrem Grundaufbau ist die Wandung der Sondenrohre erfindungsgemäßer Erdwärmesonden somit bevorzugt zumindest dreischichtig aus Diffusionssperrschicht, Kleber und Mantelschicht aufgebaut. Es sind aber auch noch erfindungsgemäße Aufbauten mit mehr Schichten denkbar. Z.B. kann vorgesehen sein, dass auf einer zum Rohrinnenhohlraum weisenden Oberfläche der Diffusionssperrschicht zusätzlich eine Innenschicht aus Kunststoff angeordnet ist. Hierbei ist günstigerweise vorgesehen, dass die Innenschicht mit der Diffusionssperrschicht verklebt ist. Auch hier handelt es sich bei der Verklebung um eine günstigerweise vollflächige Klebschicht. Auch die Innenschicht besteht günstigerweise aus Kunststoff. Es können z.B. dieselben Kunststoffe wie bei der Mantelschicht eingesetzt werden. Die Wandstärke der gegebenenfalls vorhandenen Innenschicht beträgt günstigerweise von 0,5mm bis 6,0mm, bevorzugt von 1,0mm bis 5,0mm. Sofern sie vorhanden ist, erhöht diese Innenschicht die Innendruckfestigkeit des Sondenrohres. Darüber hinaus kann sie auch zur weiteren Stabilisierung der Diffusionssperrschicht eingesetzt werden. Wie gesagt, ist diese Innenschicht aber optional und muss nicht zwingend vorhanden sein.

Bei erfindungsgemäßen Erdwärmesonden ist, wie bereits oben ausgeführt, günstigerweise vorgesehen, dass das Sondenrohr für die Lagerung und/oder den Transport vor dem Einbau in ein Bohrloch zu einer Rolle aufgewickelt oder aufwickelbar ist. Der Innenradius einer solchen Rolle bzw. der kleinste Biegeradius beim Aufwickeln des Sondenrohres liegt günstigerweise im Bereich zwischen dem 5-fachen und dem 20-fachen des Durchmessers des Rohrinnenhohlraums des jeweiligen Sondenrohres.

Wie oben bereits angeführt, betrifft die Erfindung auch eine Anordnung mit einem in einem Untergrund angeordneten Bohrloch und zumindest einer erfindungsgemäßen Erdwärmesonde, wobei das zumindest eine Sondenrohr der Erdwärmesonde in dem Bohrloch angeordnet ist. Der Zwischenraum zwischen der Bohrlochwand des Bohrlochs und dem Sondenrohr bzw. den Sondenrohren kann dann zur Stabilisierung des Sondenrohres bzw. der Sondenrohre aber auch zur Verbesserung des Wärmeübergangs mit einem an sich bekannten Füllmaterial wie z.B. Bentonit befüllt sein. An seinem, im Bohrloch gesehen unteren Ende kann das Sondenrohr z.B. mittels einer Kappe und/oder mittels Verschweißen oder in anderer geeigneter Art und Weise verschlossen sein. Es ist aber auch möglich, zwei Sondenrohre einer Erdwärmesonde U-förmig z.B. am Sondenfuß miteinander zu verbinden. Der Sondenfuß bezeichnet das untere Ende der Erdwärmesonde im in das Bohrloch eingebauten Zustand. Am gegenüberliegenden also am in der Einbaustellung oberen Ende der Erdwärmesonde bzw. der Sondenrohre liegt der Sondenkopf. An diesem ist, wie oben bereits ausgeführt, günstigerweise der Kondensator vorgesehen.

Die Sondenrohre erfindungsgemäßer Erdwärmesonden können mit beim Stand der Technik an sich bekannten Mitteln hergestellt werden. Z.B. ist es möglich, die Mantelschicht und die Klebschicht durch Coextrusion auf einem entsprechenden, die Diffusionssperrschicht bildenden Metallrohr aufzubringen. Das Metallrohr kann vorher mit an sich bekannten Mitteln hergestellt werden. Sofern eine Innenschicht vorhanden ist, kann diese mit der ihr zugeordneten Klebschicht ebenfalls in Coextrusion hergestellt werden. Auch andere Herstellungsverfahren sind natürlich denkbar.

Wie bereits oben ausgeführt, ist im Betrieb der Erdwärmesonde günstigerweise vorgesehen, dass das Wärmeträgerfluid in flüssiger Form an der den Rohrinnenhohlraum begrenzenden Innenoberfläche des Sondenrohres zur Verdampfungszone, also in Richtung hin zum Bohrlochtiefsten zurückfließt. Bei der Innenoberfläche kann es sich dabei sowohl um die zum Rohrinnenhohlraum weisende Oberfläche der Diffusionssperrschicht aber, sofern eine Innenschicht vorhanden ist, auch um die zum Rohrinnenhohlraum weisende Oberfläche der Innenschicht handeln. Beim Entlangfließen des flüssigen Wärmeträgerfluides an der Innenoberfläche bildet sich eine Art Flüssigkeitsfilm aus, wobei es erstrebenswert ist, dass dieser Flüssigkeitsfilm bzw. das flüssige Wärmeträgerfluid sich zur besseren Wärmeaufnahme möglichst gleichmäßig über den gesamten Umfang der Innenoberfläche des Sondenrohres verteilt. Um dies zu fördern, sehen bevorzugte Varianten der Erfindung vor, dass das Sondenrohr an seiner den Rohrinnenhohlraum begrenzenden Innenoberfläche eine Rillenstruktur zur Verteilung des Wärmeträgerfluides über den Umfang der Innenoberfläche aufweist, wobei die Rillenstruktur bildende Rillen schräg zu einer Längsachse des Sondenrohres verlaufend angeordnet sind. Das Wort "schräg" bedeutet dabei, dass die Rillen weder orthogonal noch parallel zur Längsachse des Sondenrohres verlaufen. Günstigerweise schließen die Rillen mit der Längsachse bzw. mit einer Parallelen zur Längsachse einen Winkel von 5° bis 85°, besonders bevorzugt einen Winkel von 40° bis 50°, ein. Die Rillen können dabei in der Art eines Gewindegangs, also spiralförmig umlaufend entlang der Innenoberfläche verlaufen. Es kann sich aber auch um sich kreuzende Rillen handeln. Es kann auch vorgesehen sein, dass die Rillen in einem bestimmten Bereich parallel zueinander verlaufen und dann in einem benachbarten Bereich hierzu in einer anderen Richtung parallel zueinander verlaufen, um nur einige Beispiele zu nennen.

Um den Flüssigkeitsfilm des Wärmeträgerfluides möglichst gleichmäßig auf der Innenoberfläche des Sondenrohres zu verteilen, sieht die Erfindung vor, die Materialien so zu wählen, dass aufgrund ihrer Oberflächenspannung eine Benetzung der Innenoberfläche des Rohrinnenhohlraums entsteht. Hierzu können auf der Innenoberfläche gegebenenfalls auch entsprechende Beschichtungen aufgebracht werden. Es kann sich hier z.B. um Materialien mit weiteren Funktionen, wie z.B. Polymere, handeln. Die Wandstärke solcher zusätzlichen Beschichtungen liegt günstigerweise im Bereich von 0,01mm bis 0,2mm. Bei der Erfindung ist vorgesehen, dass das Sondenrohr an seiner den Rohrinnenhohlraum begrenzenden Innenoberfläche zur Benetzung der

Innenoberfläche mit Wärmeträgerfluid eine Oberflächenspannung aufweist, welche gleich oder größer der Oberflächenspannung des Wärmeträgerfluides im flüssigen Zustand ist. Während z.B. Kohlendioxid eine Oberflächenspannung von 4,5 mN/m (Millinewton pro Meter) aufweist, haben Metalle üblicherweise Oberflächenspannungen größer 1000 mN/m und Kunststoffe wie z.B. Polyethylen immer noch Oberflächenspannungen von 35,7 mN/m oder dergleichen.

Weitere Merkmale und Einzelheiten bevorzugter Ausführungsvarianten der Erfindung werden beispielhaft in den nachfolgend beschriebenen Figuren dargestellt. Es zeigen:
Fig. 1 schematisiert die Anordnung einer erfindungsgemäßen Erdwärmesonde mit einem Erdwärmesondenrohr in einem Bohrloch;
Fig. 2 bis 4 Abschnitte von Ausführungsvarianten erfindungsgemäßer Erdwärmesonden im Bohrloch mit mehr als einem Sondenrohr;
Fig. 5 bis 7 Darstellungen zu einem Sondenrohr mit einem dreischichtigen Wandaufbau;
Fig. 8 bis 10 Darstellungen zu einem Sondenrohr einer erfindungsgemäßen Erdwärmesonde mit einem fünfschichtigen Wandaufbau;
Fig. 11 bis 14 Darstellungen zu verschiedenen Möglichkeiten der Ausbildung von Rillenstrukturen an der den Rohrinnenhohlraum begrenzenden Innenoberfläche und
Fig. 15 und 16 Darstellungen einer zu einer Rolle aufgewickelten erfindungsgemäßen Erdwärmesonde vor dem Einbau ins Bohrloch.

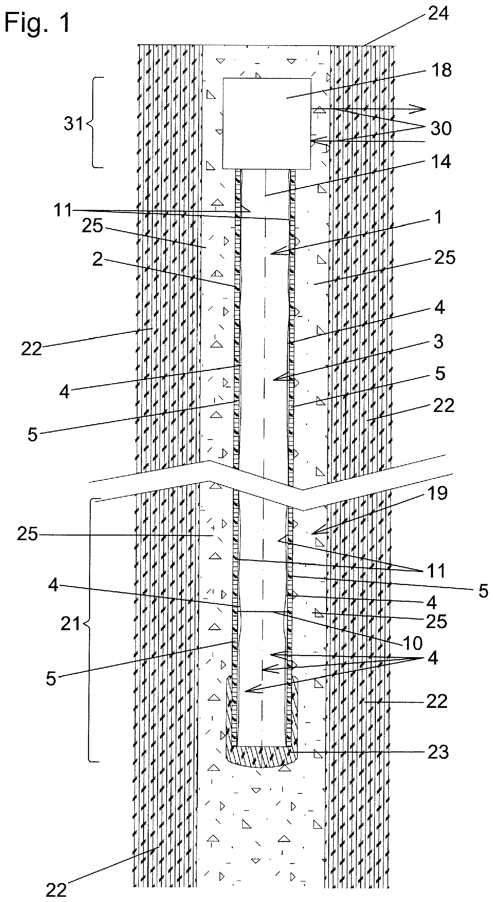

Fig. 1 zeigt schematisiert eine erfindungsgemäße Erdwärmesonde 1 in Betriebsstellung. Das Sondenrohr 2 ist in einem im Untergrund 22 angeordneten Bohrloch 19 eingebaut. Das Füllmaterial 25 füllt den Zwischenraum zwischen dem Sondenrohr 2 und der Wandung des Bohrlochs 19. Ein geeignetes Füllmaterial 25 zur Förderung der Wärmeübertragung ist z.B. Bentonit. Es können aber auch alle anderen beim Stand der Technik bekannten bzw. geeigneten Füllmaterialien zum Einsatz kommen. Dargestellt sind in Fig. 1 der untere Bereich des Sondenrohrs 2, in dem sich die Verdampfungszone 21 befindet und der obere Bereich des Bohrlochs 19 mit der Kühlzone 31, in der das Sondenrohr 2 bevorzugt knapp unter der Geländeoberkante 24 angeordnet ist. Am oberen Ende und damit in der Kühlzone 31, also am Sondenkopf des Sondenrohrs 2, weist die Erdwärmesonde 1 im gezeigten Beispiel den Kondensator 18 zum Kondensieren des sich im gasförmigen Zustand befindenden Wärmeträgerfluids auf. Der Kondensator 18 kann gemäß des Standes der Technik ausgebildet sein und ist hier nicht genauer dargestellt. Über die Zu- und Abführleitungen 30 kann die durch Kondensation des gasförmigen Wärmeträgerfluids 4 gewonnene Wärme einer Nutzung zugeführt werden.

Im Ausführungsbeispiel gemäß Fig. 1 weist die erfindungsgemäße Erdwärmesonde 1 genau ein Sondenrohr 2 auf, welches an seinem unteren Ende, also am Sondenfuß von einem hier kappenförmig ausgeführten Endabschluss 23 verschlossen ist. Der Durchmesser 10 des Rohrinnenhohlraums 3 beträgt in bevorzugten Ausführungsformen, wie bereits eingangs erläutert, Werte von 10 bis 100mm, besonders bevorzugt von 14 bis 50mm. Der Rohrinnenhohlraum 3 des Sondenrohres 2 erstreckt sich vom Sondenkopf, im gezeigten Beispiel also vom Kondensator 18, bis zum Endabschluss 23. Im Rohrinnenhohlraum 3, welcher von der Wandung 5 des Sondenrohres 2 umgeben ist, befindet sich bis auf gegebenenfalls vorhandene sonstige Gase außer dem Wärmeträgerfluid 4 nichts, also insbesondere auch keine sonstigen Einbauten und/oder Festkörper.

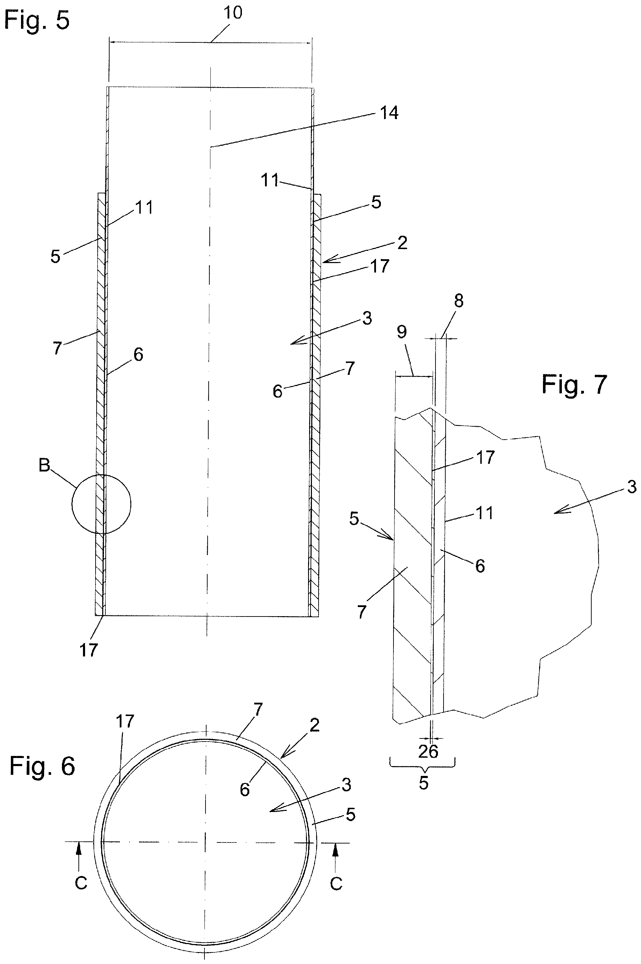

Zum erfindungsgemäßen Aufbau der Wandung 5 des Sondenrohres 2 wird beispielhaft auf die in den Fig. 5 bis 9 gezeigten Ausführungsvarianten verwiesen, welche weiter unten erläutert werden.

Im Betrieb der Erdwärmesonde 1 wird das Wärmeträgerfluid 4 in der Verdampfungszone 21 verdampft und steigt im gasförmigen Zustand im Inneren des Rohrinnenhohlraums 3 bis in den Kondensator 18 hinein auf. Im Kondensator 18 kondensiert das gasförmige Wärmeträgerfluid 4 und wird zur Flüssigkeit, wobei die aus dem Bohrloch 19 bzw. dem das Bohrloch 19 umgebenden Untergrund 22 gewonnene Wärme abgegeben und über die Zu- und Ableitung 30 abtransportiert und nutzbar gemacht wird. Das so abgekühlte und wieder verflüssigte Wärmeträgerfluid 4 fließt dann entlang der den Rohrinnenhohlraum 3 umgebenden Innenoberfläche 11 des Sondenrohres 2 wieder nach unten in Richtung Endabschluss 23 des Sondenrohres 2 und nimmt dabei die über das Füllmaterial 25 und die Wandung 5 des Sondenrohres 2 herantransportierte Wärme des Untergrundes 22 auf, sodass das flüssige Wärmeträgerfluid 4 in der Verdampfungszone 21 wieder verdampft und im Rohrinnenhohlraum 3 wieder aufsteigt.

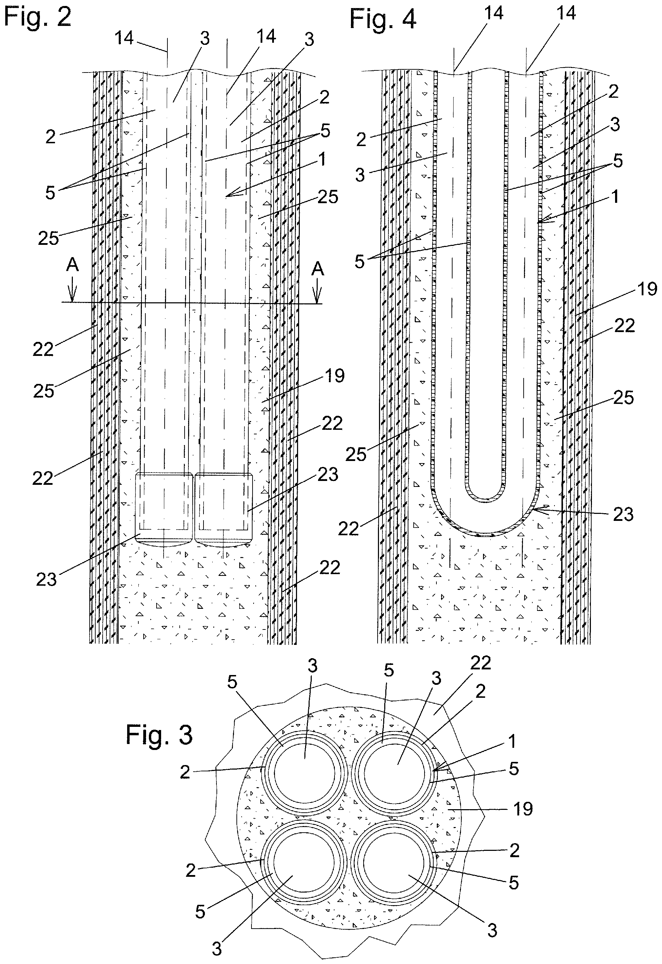

In den Fig. 2 und 3 ist beispielhaft veranschaulicht, dass eine erfindungsgemäße Erdwärmesonde 1, welche in ein Bohrloch 19 eingebaut ist, nicht nur ein, sondern auch mehrere Sondenrohre 2 aufweisen kann. Fig. 2 zeigt einen Längsschnitt durch das untere Ende der Erdwärmesonde 1 im Bohrloch 19. Fig. 3 zeigt den Horizontalschnitt entlang der Schnittlinie AA aus Fig. 2. Im Ausführungsbeispiel gemäß der Fig. 2 und 3 weist die Erdwärmesonde 1 insgesamt vier Sondenrohre 2 auf, die parallel zueinander gemeinsam in dem ansonsten wiederum mit Füllmaterial 25 verfüllten Bohrloch 19 angeordnet sind. Die Endabschlüsse 23 dieser Sondenrohre 2 sind wiederum jeweils als Kappe ausgeführt. Fig. 4 zeigt eine weitere Variante, bei der beispielhaft zwei Sondenrohre 2 an ihrem unteren Ende als Endabschluss 23 über einen gekrümmten Abschnitt miteinander verbunden sind. Auch dies ist natürlich möglich. Auch bei solchen Ausgestaltungsformen können zwei oder mehr Sondenrohre 2 als Teil einer Erdwärmesonde 1 in einem einzigen Bohrloch 19 angeordnet sein.

Die Fig. 5 bis 7 zeigen ein erstes Ausführungsbeispiel der Wandung 5 eines erfindungsgemäßen Sondenrohres 2. In diesem ersten Ausführungsbeispiel handelt es sich um einen dreischichtigen Aufbau. Fig. 5 zeigt den Längsschnitt entlang der Schnittlinie CC aus Fig. 6. Fig. 7 zeigt einen Wandabschnitt der Wandung 5 aus dem Bereich B aus Fig. 5 vergrößert.

Erfindungsgemäß weist die Wandung 5 eine Diffusionssperrschicht 6 aus Metall und eine diese außen umgebende Mantelschicht 7 aus Kunststoff auf, wobei diese beiden Schichten, also die Diffusionssperrschicht 6 und die Mantelschicht 7 miteinander verklebt sind. In dem Ausführungsbeispiel gemäß der Fig. 5 bis 7 ist diese Verklebung mittels einer durchgehenden vollflächigen Klebschicht 17 realisiert. Zur Wandstärke 8 der Diffusionssperrschicht 6, zur Wandstärke 9 der Mantelschicht 7 sowie zur Dicke 26 der Klebschicht 17 wird auf die eingangs genannten bevorzugten Wertebereiche verwiesen. Dies gilt auch für die bevorzugten Bereiche des Durchmessers 10 des Rohrinnenhohlraums 3 des Sondenrohres 2. Darüber hinaus wurden auch die bevorzugten Materialien, welche zur Ausbildung der Diffusionssperrschicht 6, der Mantelschicht 7 und der Klebschicht 17 verwendet werden können, bereits eingangs erläutert. Auch hierauf wird somit verwiesen.

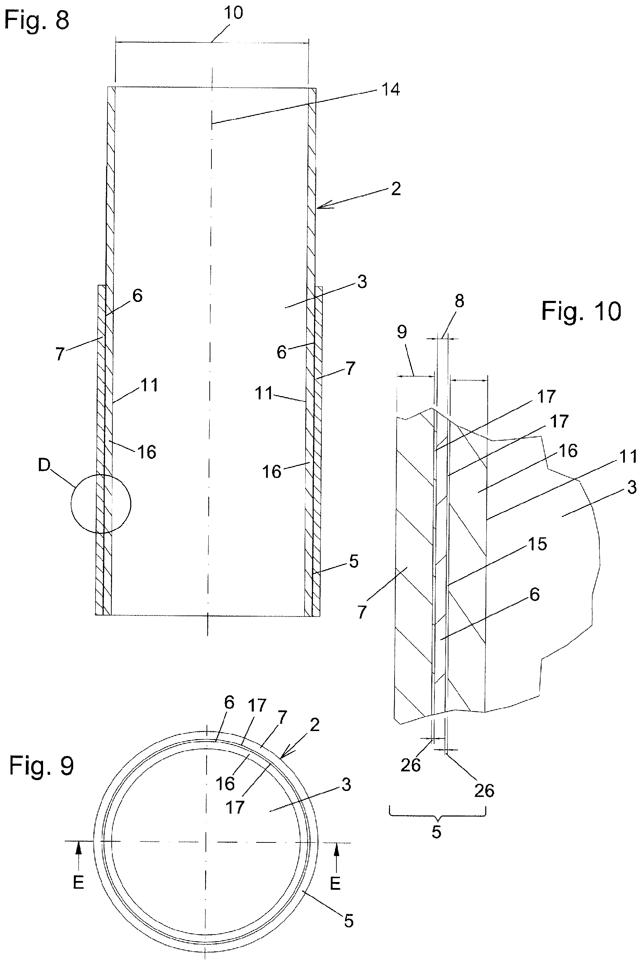

Die Fig. 8 bis 10 zeigen beispielhaft eine weitere Möglichkeit, wie die Wandung 5 eines Sondenrohres 2 einer erfindungsgemäßen Erdwärmesonde 1 aufgebaut sein kann. Hier handelt es sich um einen fünfschichtigen Aufbau. Zusätzlich zu den bereits in den Fig. 5 bis 7 gezeigten Schichten weist die Wandung 5 hier noch eine Innenschicht 16 aus Kunststoff auf, welche mittels einer zusätzlichen Klebschicht 17 auf der zum Innenhohlraum 3 weisenden Oberfläche 15 der Diffusionssperrschicht 6 aufgebracht ist. In diesem Ausführungsbeispiel sind sowohl die Diffusionssperrschicht 6 und die Mantelschicht 7, als auch die Diffusionssperrschicht 6 und die Innenschicht 16 mittels entsprechender Klebschichten 17 miteinander verklebt. Zu den Schichtdicken und bevorzugten Materialien wird wiederum auf die eingangs bereits dargelegten Ausführungen verwiesen. Bei diesem zweiten Ausführungsbeispiel eines erfindungsgemäßen Aufbaus einer Wandung 5, zeigt Fig. 8 einen Längsschnitt durch das Sondenrohr 2 entlang der Schnittlinie EE aus Fig. 9. Fig. 10 zeigt den Bereich D der Wandung 5 aus Fig. 8 vergrößert.

Wie eingangs bereits erläutert, ist vorgesehen, dass die Innenoberfläche 11 des Sondenrohres 2, also die Oberfläche entlang der das flüssige Wärmeträgerfluid 4 nach unten fließt, so ausgebildet ist, dass das flüssige Wärmeträgerfluid 4 in Umfangsrichtung möglichst gleichmäßig über die Innenoberfläche 11 verteilt wird. Bezugnehmend auf die Fig. 5 bis 10 ist darauf hinzuweisen, dass diese Innenoberfläche 11 sowohl direkt in der Diffusionssperrschicht 6 als auch, soweit vorhanden, in der Innenschicht 16 angeordnet sein kann.

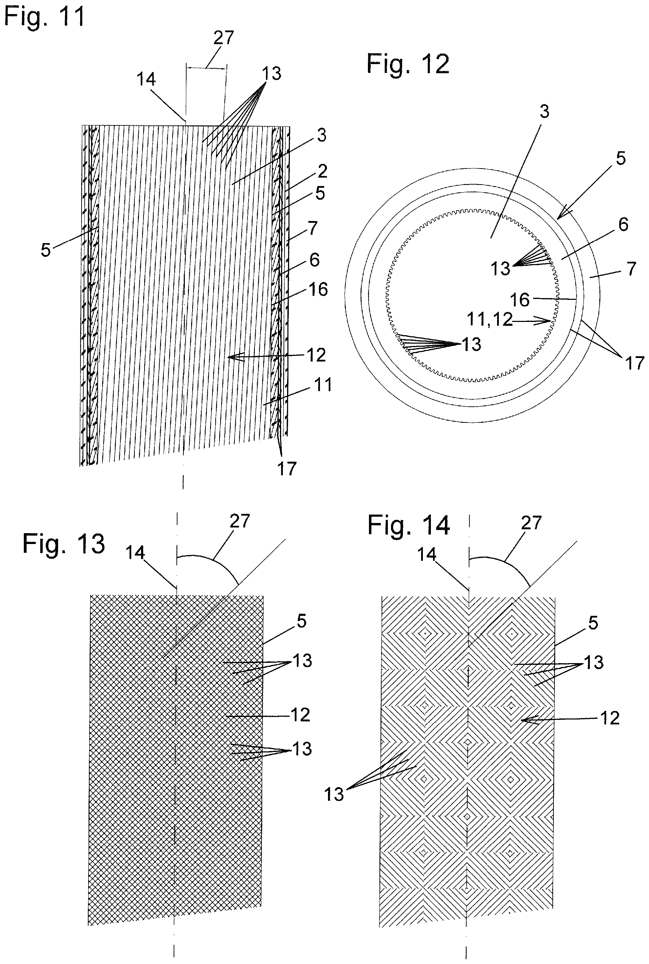

Eine der möglichen Maßnahmen, um das flüssige Wärmeträgerfluid 4 in Umfangsrichtung möglichst gleichmäßig über die Innenoberfläche 11 zu verteilen, ist es, wie eingangs bereits erläutert, die Innenoberfläche 11 mit einer entsprechenden Rillenstruktur 12 auszustatten. Fig. 11 zeigt ein erstes Ausführungsbeispiel, bei dem die die Rillenstruktur 12 bildenden Rillen 13 Gewinde bzw. spiralenförmig um die Längsachse 14 des Sondenrohrs 2 umlaufend ausgebildet sind. In Fig. 11 ist der Winkel 27 zwischen den Rillen 13 und der Längsachse 14 des Sondenrohres 2 relativ gering ausgebildet. Er beträgt hier nur 3°. Fig. 12 zeigt einen Horizontalschnitt durch das Sondenrohr 2 gemäß Fig. 11. Der Vollständigkeit halber wird darauf hingewiesen, dass es sich bei der Wandung 5 hier um einen fünfschichtigen Aufbau handelt, bei dem die Innenoberfläche 11, in der sich die Rillenstruktur 12 befindet, eine innere Oberfläche der Innenschicht 16 ist. Die Innenschicht 16 und die Klebschicht 17 können aber, wie gesagt, auch weggelassen werden. In diesen Fällen ist dann die Innenoberfläche 11, in der die Rillenstruktur 12, soweit vorhanden, angeordnet ist, die innere Oberfläche 15 der Diffusionssperrschicht 6.

Die Fig. 13 und 14 zeigen weitere Varianten der Rillenstruktur 12. In Fig. 13 handelt es sich um eine dichte Abfolge von Rillen 13, welche in einem Winkel 27 von 45° gegen die Längsachse 14 angeordnet sind und sich gegenseitig kreuzen. In der Variante gemäß Fig. 14 ist die Innenoberfläche 11 in viele einander benachbarte Felder unterteilt, in denen die Rillen 13 jeweils parallel zueinander angeordnet sind. Auch hier sind die Rillen 13 in einem Winkel 27 von 45° gegen die Längsachse 14 des Sondenrohres 2 angeordnet.

All dies sind natürlich nur ausgewählte Beispiele einer entsprechenden Rillenstruktur 12. Diese kann natürlich auch anders ausgeformt sein. Wichtig ist nur, dass sie dabei hilft, das flüssige Wärmeträgerfluid 4 möglichst gleichmäßig in Umfangsrichtung des Sondenrohres auf der Innenoberfläche 11 zu verteilen.

Eine weitere Maßnahme, welche anstelle dessen oder zusätzlich realisiert werden kann, um eine möglichst gleichmäßige Verteilung des flüssigen Wärmeträgerfluids 4 in Umfangsrichtung über die Innenoberfläche 11 zu erzielen, besteht darin, diese Innenoberfläche 11 mit einer gewissen Rauheit und/oder kapillaren Struktur zu versehen. Günstig sind hierbei Rauheitsklassen im Bereich N8 bis 12 (Ra3.2 bis 50) für grobe Oberflächenstrukturen und die Rauheitsklassen N7 oder kleiner (<=Ra1,6) für feinere Oberflächenstrukturen. Die Rauheitsklassen sind dabei in den Normen DIN EN ISO 4287 (in der Fassung 2010-7) und DIN 4760 (in der Fassung 1982-06) beschrieben.

Die erfindungsgemäße, eingangs bereits beschriebene Maßnahme, um die Benetzung der Innenoberfläche mit flüssigem Wärmeträgerfluid zu verbessern, besteht in der entsprechenden Bereitstellung der Oberflächenspannungen der beteiligten Materialien. Diese Maßnahme kann in Kombination mit den anderen bereits genannten Maßnahmen oder auch alleine verwendet werden, um die Innenoberfläche 11 so auszugestalten, dass das flüssige Wärmeträgerfluid sich möglich gleichmäßig in Umfangsrichtung auf der Innenoberfläche 11 verteilt.

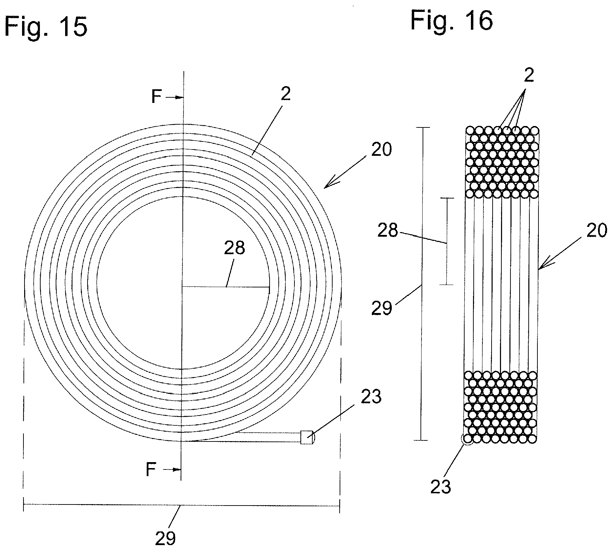

Die Fig. 15 und 16 zeigen nun beispielhaft und schematisiert noch, wie das Sondenrohr 2 erfindungsgemäßer Erdwärmesonden 1 zu einer Rolle 20 aufgewickelt werden kann. Wie bereits eingangs ausgeführt, beträgt der kleinste Biegeradius 28 im Inneren der Rolle 20 also deren Innenradius günstigerweise das 5-fache bis 20-fache des jeweiligen Durchmessers 10 des Rohrinnenhohlraums 3 des Sondenrohres 2. Der Außendurchmesser 29 der Rolle 20 liegt im Sinne einer guten Transportierbarkeit auf einem LKW günstigerweise im Bereich von 600mm bis 2400mm.

Fig. 16 zeigt beispielhaft und schematisiert einen Vertikalschnitt entlang der Schnittlinie FF aus Fig. 15 durch das zur Rolle 20 aufgewickelte Sondenrohr 2.

**Legende zu den Hinweisziffern:**

| | | | |
|---|---|---|---|
| 1 | Erdwärmesonde | 17 | Klebschicht |
| 2 | Sondenrohr | 18 | Kondensator |
| 3 | Rohrinnenhohlraum | 19 | Bohrloch |
| 4 | Wärmeträgerfluid | 20 | Rolle |
| 5 | Wandung | 21 | Verdampfungszone |
| 6 | Diffusionssperrschicht | 22 | Untergrund |
| 7 | Mantelschicht | 23 | Endabschluss |
| 8 | Wandstärke | 24 | Geländeoberkante |
| 9 | Wandstärke | 25 | Füllmaterial |
| 10 | Durchmesser | 26 | Dicke |
| 11 | Innenoberfläche | 27 | Winkel |
| 12 | Rillenstruktur | 28 | Biegeradius |
| 13 | Rille | 29 | Außendurchmesser |
| 14 | Längsachse | 30 | Zu- und Ableitung |
| 15 | Oberfläche | 31 | Kühlzone |
| 16 | Innenschicht | | |

## Patentansprüche

1. Erdwärmesonde (1) mit zumindest einem Sondenrohr (2), wobei ein Rohrinnenhohlraum (3) des Sondenrohres (2) mit einem zweiphasigen Wärmeträgerfluid (4) befüllt ist, und eine, den Rohrinnenhohlraum (3) umgebende, Wandung (5) des Sondenrohres (2) zumindest eine in sich umfangsgeschlossene Diffusionssperrschicht (6) aus Metall und zumindest eine, die Diffusionssperrschicht (6) außen ummantelnde Mantelschicht (7) aus Kunststoff aufweist, **dadurch gekennzeichnet, dass** die Diffusionssperrschicht (6) und die Mantelschicht (7), vorzugsweise direkt, miteinander verklebt sind und dass das Sondenrohr (2) an seiner den Rohrinnenhohlraum (3) begrenzenden Innenoberfläche (11) zur Benetzung der Innenoberfläche (11) mit Wärmeträgerfluid (4) eine Oberflächenspannung aufweist, welche gleich oder größer der Oberflächenspannung des Wärmeträgerfluides (4) im flüssigen Zustand ist.

2. Erdwärmesonde (1) nach Anspruch 1, **dadurch gekennzeichnet, dass** die Diffusionssperrschicht (6) eine Wandstärke (8) von 0,05 mm bis 1,00 mm, vorzugsweise von 0,10 mm bis 0,50 mm, aufweist und/oder die Mantelschicht (7) eine Wandstärke (9) von 0,5 mm bis 10,0 mm, vorzugsweise von 1,0 mm bis 4,0 mm, aufweist und/oder dass der Rohrinnenhohlraum (3) einen Durchmesser (10) von 10,0 mm bis 100,0 mm, vorzugsweise von 14,0 mm bis 50,0 mm, aufweist.

3. Erdwärmesonde (1) nach Anspruch 1 oder 2, **dadurch gekennzeichnet, dass** das Sondenrohr (2) an seiner den Rohrinnenhohlraum (3) begrenzenden Innenoberfläche (11) eine Rillenstruktur (12) zur Verteilung des Wärmeträgerfluides (4) über den Umfang der Innenoberfläche (11) aufweist, wobei die Rillenstruktur (12) bildende Rillen (13) schräg zu einer Längsachse (14) des Sondenrohres (2) verlaufend, vorzugsweise in einem Winkel von 20° bis 70°, angeordnet sind.

4. Erdwärmesonde (1) nach einem der Ansprüche 1 bis 3, **dadurch gekennzeichnet, dass** auf einer zum Rohrinnenhohlraum (3) weisenden Oberfläche (15) der Diffusionssperrschicht (6) zusätzlich eine Innenschicht (16) aus Kunststoff angeordnet ist, wobei vorzugsweise vorgesehen ist, dass die Innenschicht (16) mit der Diffusionssperrschicht (6) verklebt ist.

5. Erdwärmesonde (1) nach einem der Ansprüche 1 bis 4, **dadurch gekennzeichnet, dass** die Diffusionssperrschicht (6) mit der Mantelschicht (7) und/oder die gegebenenfalls vorhandene Innenschicht (16) mit der Diffusionssperrschicht (6) mittels zumindest einer zwischen ihnen angeordneten Klebschicht (17) vollflächig miteinander verklebt sind.

6. Erdwärmesonde (1) nach einem der Ansprüche 1 bis 5, **dadurch gekennzeichnet, dass** die Erdwärmesonde (1) einen Kondensator (18) zum Kondensieren des sich im gasförmigen Zustand befindenden Wärmeträgerfluides (4) aufweist.

7. Erdwärmesonde (1) nach einem der Ansprüche 1 bis 6, **dadurch gekennzeichnet, dass** das Sondenrohr (2) für die Lagerung und/oder den Transport vor dem Einbau in ein Bohrloch (19) zu einer Rolle (20) aufgewickelt und/oder aufwickelbar ist.

8. Verfahren zum Betrieb einer Erdwärmesonde (1) nach einem der Ansprüche 1 bis 7, **dadurch gekennzeichnet, dass** das Wärmeträgerfluid (4) in einer Verdampfungszone (21) der Erdwärmesonde (1) verdampft wird und von dort im Rohrinnenhohlraum (3) als Gas aufsteigt und nach seiner Kondensation als Flüssigkeit an der den Rohrinnenhohlraum (3) begrenzenden Innenoberfläche (11) des Sondenrohres (2) wieder zur Verdampfungszone (21) zurückfließt.

9. Anordnung mit einem, in einem Untergrund (22) angeordneten Bohrloch (19) und zumindest einer, in dem Bohrloch (19) angeordneten Erdwärmesonde (1) nach einem der Ansprüche 1 bis 7, wobei das zumindest eine Sondenrohr (2) der Erdwärmesonde (1) in dem Bohrloch (19) angeordnet ist.

## Claims

1. Geothermal probe (1) comprising at least one probe tube (2), an inner tube cavity (3) of the probe tube (2) being filled with a two-phase heat transfer fluid (4), and a wall (5) of the probe tube (2) surrounding the inner tube cavity (3) comprising at least one circumferentially closed diffusion barrier layer (6) consisting of metal and at least one jacket layer (7) consisting of plastics material sheathing the diffusion barrier layer (6) on the outside, **characterised in that** the diffusion barrier layer (6) and the jacket layer (7) are glued to one another, preferably directly, and **in that** the probe tube (2) has a surface tension on the inner surface (11) thereof delimiting the inner tube cavity (3) for wetting the inner surface (11) with heat transfer fluid (4), which surface tension is equal to or greater than the surface tension of the heat transfer fluid (4) in the liquid state.

2. Geothermal probe (1) according to claim 1, **characterised in that** the diffusion barrier layer (6) has a wall thickness (8) of 0.05 mm to 1.00 mm, preferably 0.10 mm to 0.50 mm, and/or the jacket layer (7) has a wall thickness (9) of 0.5 mm to 10.0 mm, preferably 1.0 mm to 4.0 mm, and/or the inner tube cavity (3) has a diameter (10) of 10.0 mm to 100.0 mm, preferably 14.0 mm to 50.0 mm.

3. Geothermal probe (1) according to claim 1 or 2, **characterised in that** the probe tube (2) has a groove structure (12) on the inner surface (11) thereof delimiting the inner tube cavity (3) for distributing the heat transfer fluid (4) over the circumference of the inner surface (11), the grooves (13) forming the groove structure (12) being arranged so as to extend obliquely to a longitudinal axis (14) of the probe tube (2), preferably at an angle of 20° to 70°.

4. Geothermal probe (1) according to any of claims 1 to 3, **characterised in that** an inner layer (16) consisting of plastics material is additionally arranged on a surface (15) of the diffusion barrier layer (6) facing the inner tube cavity (3), the inner layer (16) preferably being glued to the diffusion barrier layer (6).

5. Geothermal probe (1) according to any of claims 1 to 4, **characterised in that** the diffusion barrier layer (6) is glued to the jacket layer (7) and/or the optionally present inner layer (16) is glued to the diffusion barrier layer (6) in each case over the entire surface of each layer by means of at least one layer of adhesive (17) arranged between said layers.

6. Geothermal probe (1) according to any of claims 1 to 5, **characterised in that** the geothermal probe (1) comprises a condenser (18) for condensing the heat transfer fluid (4) in the gaseous state.

7. Geothermal probe (1) according to any of claims 1 to 6, **characterised in that** the probe tube (2) is rolled up and/or can be rolled up into a roll (20) for storage and/or transportation prior to insertion in a borehole (19) .

8. Method for operating a geothermal probe (1) according to any of claims 1 to 7, **characterised in that** the heat transfer fluid (4) is evaporated in an evaporation zone (21) of the geothermal probe (1) and from there rises as a gas in the inner tube cavity (3) and after condensing as a liquid on the inner surface (11) of the probe tube (2) delimiting the inner tube cavity (3) flows back to the evaporation zone (21).

9. Arrangement comprising a borehole (19) arranged in the subsoil (22) and at least one geothermal probe (1) according to any of claims 1 to 7 arranged in the borehole (19), wherein the at least one probe tube (2) of the geothermal probe (1) is arranged in the borehole (19).

## Revendications

1. Sonde géothermique (1) avec au moins un tube de sonde (2), une cavité tubulaire intérieure (3) du tube de sonde (2) étant remplie d'un fluide caloporteur (4) à deux phases, et une paroi (5) du tube de sonde (2) qui entoure la cavité tubulaire intérieure (3) est munie d'au moins une couche de barrière de diffusion (6) en métal, fermée sur elle-même sur la circonférence, et d'au moins une couche d'enveloppe (7) en matière plastique qui entoure à l'extérieur la couche de barrière de diffusion (6), **caractérisé en ce que** la couche de barrière de diffusion (6) et la couche d'enveloppe (7) sont collées l'une à l'autre, de préférence directement, et **en ce que** pour mouiller la surface intérieure (11) avec du fluide caloporteur (4), le tube de sonde (2) présente, sur sa surface intérieure (11) délimitant la cavité tubulaire intérieure (3), une tension superficielle qui est égale ou supérieure à la tension superficielle du fluide caloporteur (4) à l'état liquide.

2. Sonde géothermique (1) selon la revendication 1, **caractérisée en ce que** la couche de barrière de diffusion (6) présente une épaisseur de paroi (8) comprise entre 0,05 mm et 1,00 mm, de préférence comprise entre 0,10 mm et 0,50 mm, et/ou la couche d'enveloppe (7) présente une épaisseur de paroi (9) comprise entre 0,5 mm et 10,0 mm, de préférence entre 1,0 mm et 4,0 mm, et/ou **en ce que** la cavité tubulaire intérieure (3) a un diamètre (10) compris entre 10,0 mm et 100,0 mm, de préférence compris entre 14,0 mm et 50,0 mm.

3. Sonde géothermique (1) selon la revendication 1 ou 2, **caractérisée en ce que** le tube de sonde (2) est muni d'une structure rainurée (12) sur sa surface intérieure (11) délimitant la cavité tubulaire intérieure (3) pour la répartition du fluide caloporteur (4) sur la périphérie de la surface intérieure (11), des rainures (13) formant la structure rainurée (12) étant disposées en s'étendant obliquement par rapport à un axe longitudinal (14) du tube de sonde (2), de préférence sous un angle compris entre 20° et 70°.

4. Sonde géothermique (1) selon l'une des revendications 1 à 3, **caractérisée en ce qu'**une couche intérieure (16) en matière plastique est en outre disposée sur une surface (15) de la couche de barrière de diffusion (6) dirigée vers la cavité tubulaire intérieure (3), étant précisé qu'il est de préférence prévu de coller la couche intérieure (16) à la couche de barrière de diffusion (6).

5. Sonde géothermique (1) selon l'une quelconque des revendications 1 à 4, **caractérisée en ce que** la couche de barrière de diffusion (6) est collée sur toute la surface à la couche d'enveloppe (7) au moyen d'au moins une couche adhésive (17) disposée entre elles, et/ou la couche intérieure (16), si elle est présente, est collée sur toute la surface à la couche de barrière de diffusion (6) au moyen d'au moins une couche adhésive (17) disposée entre elles.

6. Sonde géothermique (1) selon l'une quelconque des revendications 1 à 5, **caractérisée en ce que** la sonde géothermique (1) est munie d'un condenseur (18) pour condenser le fluide caloporteur (4) se trouvant à l'état gazeux.

7. Sonde géothermique (1) selon l'une quelconque des revendications 1 à 6, **caractérisée en ce que** pour le stockage et/ou le transport avant l'installation dans un trou de forage (19), le tube de sonde (2) est enroulé et/ou peut être enroulé sous la forme d'un rouleau (20).

8. Procédé pour faire fonctionner une sonde géothermique (1) selon l'une des revendications 1 à 7, **caractérisé en ce que** le fluide caloporteur (4) est vaporisé dans une zone de vaporisation (21) de la sonde géothermique (1) et de là monte sous forme de gaz dans la cavité tubulaire intérieure (3) et, après sa condensation, revient sous forme liquide dans la zone d'évaporation (21) sur la surface intérieure (11) du tube de sonde (2) délimitant la cavité (3) tubulaire intérieur.

9. Agencement avec un trou de forage (19) disposé dans un sous-sol (22) et au moins une sonde géothermique (1) selon l'une des revendications 1 à 7 disposée dans le trou de forage (19), le au moins un tube de sonde (2) de la sonde géothermique (1) étant disposé dans le trou de forage (19).
